(19) Europäisches Patentamt / European Patent Office / Office européen des brevets

(11) EP 4 730 671 A1

(12) EUROPEAN PATENT APPLICATION

(43) Date of publication:
22.04.2026 Bulletin 2026/17

(21) Application number: 24207400.3

(22) Date of filing: 18.10.2024

(51) International Patent Classification (IPC):
H04B 10/071 (2013.01)

(52) Cooperative Patent Classification (CPC):
H04B 10/071

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Adtran Networks SE
98617 Meiningen (DE)

(72) Inventors:
• Rapp, Lutz
  98617 Meiningen (DE)
• Chanteau, Bruno
  98617 Meiningen (DE)

(74) Representative: Eder Schieschke & Partner mbB
Patentanwälte
Elisabethstraße 34
80796 München (DE)

(54) **MONITORING SYSTEM WITH EDF FOR MONITORING FIBER INTEGRITY IN OPTICAL TRANSMISSION SYSTEMS**

(57) The present invention relates to a method for monitoring fiber integrity in an optical transmission link. It relies on a monitoring signal coupled into an optical transmission fiber to verify its integrity. The monitoring signal is amplified and reflected by a passive network element if the transmission link is intact. The present invention furthermore relates to a device for monitoring fiber integrity in an optical transmission link, configured to implement the method, comprising an active network element at a first position within an optical transmission fiber. The present invention furthermore relates to a system for monitoring fiber integrity in an optical transmission link, configured to implement the method and comprising an active network element at a first position within an optical transmission link, the active network element being configured to be able to couple at least an optical signal into the transmission fiber in a direction to a passive network element, a passive network element at a second position within the optical transmission fiber, the passive network element being configured to be able to amplify and reflect a predetermined power portion of the optical signal through the optical transmission fiber back to the active network element, and an evaluation unit configured to determine the integrity of the transmission fiber.

Fig. 1

EP 4 730 671 A1

**Description**

The present invention relates to a method for monitoring fiber integrity in an optical transmission link. The present invention furthermore relates to a device for monitoring fiber integrity in an optical transmission link, configured to implement the method, comprising an active network element at a first position within an optical transmission fiber. The present invention furthermore relates to a system for monitoring fiber integrity in an optical transmission link, configured to implement the method and comprising an active network element at a first position within an optical transmission fiber, configured to be able to couple an optical signal at wavelength $\lambda_1$ into the transmission fiber in a direction towards a passive network element at a second position within the optical transmission fiber, the passive network element being configured to be able to amplify and reflect at least a predetermined power portion of the optical signal through the optical transmission fiber back to the active network element, and an evaluation unit, configured to determine the integrity of the transmission fiber.

In optical data transfer, which is e.g. used in transferring data across long distances using e.g. glass fiber cables, the signal needs to be amplified at regular distances. Without the regular amplification, the data transmitted with the signal could not be detected at the final destination. The distances the data need to traverse can be quite large with several thousand kilometers in the case of transatlantic data transfer. The amplification of an optical signal can be effected by different kinds of amplification methods. Unlike the Erbium-Doped Fiber Amplifier (EDFA), Raman amplification is achieved by a nonlinear interaction between the signal to be transferred and a pump laser within an optical transmission fiber based on scattering. The pump light may be coupled into the transmission fiber in the same direction as the signal, in the opposite direction or both. One advantage of Raman amplification is that the gain exists in every fiber. There is no need to use special fibers made for amplification purposes, such as e.g. erbium-doped fibers. However, the pump power required for Raman amplification is higher than that required by the EDFA.

Since Raman amplification implies launching pump powers into the fiber that are typically above laser safety limits, a mechanism to check the continuity of the fiber link prior to full use (e.g. operation at their respective maximum power levels) of the one or more pump lasers and during operation needs to be implemented. Operating the one or more pump lasers of a Raman amplifier at high pump powers without checking the integrity of the optical fiber first could cause damage to human beings and to the transmission network. In case of a fiber cut occurring during system operation, it is therefore mandatory to quickly detect the fiber cut and to turn off the pump lasers.

Laser safety mechanisms typically used to confirm integrity of the optical fiber require active network elements at both ends of a fiber. This, however, needs more energy and is not available in many transmission links and is therefore not suitable for this application. Just the need to provide power on an additional side increases installation cost and is therefore not the preferred solution. In many transmission links, an active network element is followed by a passive network element, since the infrastructure does not allow for energy supply at both network elements. Additional equipment would therefore be required in the transmission link, such as active laser safety devices, which is expensive and difficult to implement later in e.g. a transatlantic optical transmission link.

A solution providing laser safety without involving both ends of a transmission link is disclosed in the patent EP 1 229 382 B1. In short, the described apparatus detects amplified spontaneous emission (ASE) generated by an excitation light and decides on fiber integrity based on the measurement result. However, this solution is not very reliable if patch panel losses from the output port of the Raman pump card and the transmission fiber are not known exactly. Consequently, the amplifier will not turn on in many cases although the fiber link is intact. Furthermore, the solution does not work well with short fiber links.

Another known approach is to send two monitoring signals at two different wavelengths to a passive network element and to purposely reflect only one of them. The purposely reflected signal is then compared to the reflection of the second signal caused by scattering in the optical fiber. This method, however, requires a minimum of two lasers per active network element in order to be able to provide two signals at two different wavelengths. Lasers are expensive to purchase in operation and are not always available in existing infrastructure.

Starting from this known prior art, it is an object of the present invention to provide an efficient method for checking fiber integrity in an optical transmission link. It is a further object of the invention to provide a device for implementing such a method in an optical transmission link.

The invention achieves these objects with the combination of features of the independent claims. Further embodiments of the invention are apparent from the dependent claims.

According to the invention, the method for monitoring fiber integrity in an optical transmission link comprises several steps. The transmission link comprises at least an active network element and a passive network element which are connected via an optical transmission fiber. This layout, with a passive network element following an active network element along an optical transmission fiber, may repeat itself within the optical transmission link.

The active network element is configured in such a way that it is able to output an optical signal at a wavelength $\lambda_1$ or within a first wavelength range $\Delta\lambda_1$ into the transmission fiber in a direction towards the passive network element. The optical signal is either generated within the active network element or supplied to the active network element. Typically, the signal is generated within the active network element. For this method, a signal which has been supplied to the active network element like a WDM signal, which is a multiplexed optical signal with a wavelength range e.g. in the C-band, the L-band or a combination of both bands, but is not limited to these bands, can also be used. An optical channel at wavelength $\lambda_1$ or corresponding wavelength range $\Delta\lambda_1$ of a WDM signal can be used as the optical signal. The method is applicable to any other optical signal as well. The active network element is further configured to be able to measure relative or absolute values of the optical power of any optical signal which is emitted by the active network element or arrives at the active network element, e.g. through the optical transmission fiber.

One step of the method for monitoring fiber integrity in an optical transmission link is the outputting by the active network element of an optical signal at a wavelength $\lambda_1$ or within a wavelength range $\Delta\lambda_1$ into the transmission fiber in a direction towards the passive network element. This optical signal acts as a monitoring signal. It is understood that optical signals at a specific wavelength have spectral components in a narrow frequency range around their center wavelength. For reasons of simplicity, the signals are still referred to as a signal at a specific wavelength. In case of a multiplexed signal or the like, the wavelength range $\Delta\lambda_1$ is accordingly large. The signal can be generated within the active network element or supplied to the active network element.

Another step is the measuring, by the active network element, of relative or absolute values of the optical power $P_{in|\lambda 1}$ of the optical signal launched into the transmission fiber.

One more step is amplifying the optical signal by a pumped EDF and reflecting the optical signal to form a reflected optical signal, at the passive network element. The reflected optical signal is then traversing back, through the optical transmission fiber, to the active network element.

Another step is measuring, by the active network element, relative or absolute values $P_{RX|\lambda 1}$ of the optical power of an optical receive signal $S_{RX|1}$ which is received at the active network element. Measuring power values comprises determining power values with measurement devices designed to determine optical power as well as deriving the optical power values from other physical parameters influencing laser diode output power, such as injection current. The optical power $P_{RX|\lambda 1}$ comprises, in addition to power portions of the reflected first optical signal received, power portions caused by backscattering within the optical transmission fiber or at optical connections. Such a backscattering effect is e.g. Rayleigh scattering.

One more step is determining an evaluation parameter $R_{eval}$ that is essentially determined by the transmission characteristics of the optical transmission fiber by using measured values of the optical power $P_{RX|\lambda 1}$ and the optical power $P_{in|\lambda 1}$ of the optical signal. The final step can be comparing the evaluation parameter $R_{eval}$ with a predetermined evaluation threshold value in order to determine the integrity of the transmission fiber. These two steps can be implemented by an evaluation unit. The evaluation unit can be integrated in the active network element or it can be realized as an external device that receives the signal values $P_{RX|\lambda 1}$ and $P_{in|\lambda 1}$.

The method is not limited to these steps. One more step could e.g. be outputting the result of the evaluation to an external device. The method according to the invention can be combined with a method for detecting amplified spontaneous emission (ASE), which is suited for very large fiber lengths in the range of 50 km to 120 km. In a combination of the two methods, an intact transmission link is assumed if one of the techniques yields a positive result.

The method according to the invention works without the need for two active network elements. Active network elements in general are more expensive to manufacture, to buy and to run continuously. No necessity for more active network elements makes it possible to run the optical transmission link more efficiently. It is also not necessary to very expensively equip the optical transmission link with further active network elements after it started operating. Another advantage of the method according to the invention is its reliability. Due to its relative simplicity, there are fewer possible causes for malfunctioning.

The method according to the invention works without the need for two lasers, able to create an optical signal, in an active network element. Active network elements comprising at least two lasers for e.g. amplifying and/or monitoring are more expensive to manufacture, to buy and to run continuously. No necessity for more than one laser in an active network element makes it possible to run the optical transmission link more efficiently. It is also not necessary to very expensively equip the optical transmission link with further active network elements comprising at least two lasers, after it started operating. Another advantage of the method according to the invention is its reliability. Lasers are the most decisive factor determining an amplifier's working life. Since they are usually running essentially continuously, the lasers within an amplifier or the amplifier itself needs to be replaced after a while. Especially the pump lasers, which are designed to pump optical transmission signals, lose their capability of providing enough optical power to pump an optical signal as necessary. An amplifier using two lasers is dependent on both lasers working properly. As soon as one laser loses power as described before, the amplifier has to be replaced. Amplifiers which depend on only one laser have therefore on average a longer working life. These considerations also apply to the presented method and system for fiber integrity monitoring. Due to the method's relative simplicity, there are fewer possible causes for malfunctioning in the active network element, due to fewer necessary lasers.

Passive network elements in general are less likely to malfunction and cheaper to replace. The passive network element used in the claimed method comprises a reflection means and an amplifying means. The amplifying means can comprise an erbium-doped fiber (EDF). The EDF is configured in such a way that it amplifies the optical signal. The reflection means is configured in such a way that it reflects the optical signal back to the transmission fiber in the direction of the active network element.

In case the optical signal is supplied to the active network, the active network element can output the optical signal without comprising any device which is able to generate an optical signal. Even very simple transmission links without amplifiers can be monitored this way.

The closest prior art with regard to novelty is verifying the integrity of the optical transmission link by comparing two signals. Usually, a signal which is reflected at a passive network element is compared to a signal which is not reflected at a passive network element. The signal which is not reflected at the passive network element still experiences reflection phenomena like Rayleigh scattering within the optical fiber. In order to compare two such signals, however, the signals need two different wavelengths. In order to provide two signals at two different wavelengths, two different lasers are necessary, which is expensive. The method according to the invention provides the possibility of verifying the integrity of an optical transmission link with only one optical signal at one wavelength. This is achieved by comparing the value of the optical signal upon leaving the active network element with the value of the receive signal, which is generally much higher due to the amplification by the EDF, at different power levels. In case the transmission link is disrupted, the receive signal only comprises portions caused by scattering effects like Rayleigh scattering, which are generally very small, and does not show a characteristic nonlinear behavior.

According to an embodiment of the invention, the method further comprises the steps of outputting, at the active network element, a pump signal into the transmission fiber in a direction towards the passive network element, wherein the pump signal is suitable to pump the EDF in the passive network element and is either generated within the active network element or supplied to the active network element.

In cases of amplifiers using Raman amplification, in order to amplify the optical transmission signal, a pump laser is used for amplification. The distance the optical transmission signal can travel while being amplified by Raman amplification is limited. Due to attenuation which the optical signal and the pump signal experience in the transmission fiber, the signals lose optical power over distance. This is why, in case the amplifier is configured to use Raman amplification, the pump signal is configured to have enough power left, upon arrival at the passive network element, to excite the EDF sufficiently. The EDF is sufficiently excited when it is able to amplify the monitoring signal. Typically, a few milliwatts are sufficient for this purpose.

According to an embodiment of the invention, the evaluation parameter $R_{eval}$ is determined by forming a ratio of the measured or determined optical power $P_{in|\lambda 1}$ of the optical signal and absolute values $P_{RX|\lambda 1}$ of the optical power of the optical receive signal $S_{RX|1}$. The evaluation parameter $R_{eval}$ can be calculated by the calculation rule

$$R_{eval} = \frac{P_{RX|\lambda 1}}{P_{in|\lambda 1}}. \tag{1}$$

In this case, the predetermined evaluation threshold value can preferably be larger than 0.01, more preferably larger than 0.1 and most preferably larger than 1.

As described previously, the optical power $P_{RX|\lambda 1}$ of the optical receive signal comprises power portions caused by backscattering within the optical transmission fiber. Such a backscattering effect is e.g. Rayleigh scattering. The power portions caused by backscattering are typically very small compared to the optical power of a reflected and amplified signal. This is why, in case the optical transmission fiber is interrupted or damaged, and the optical signal does not reach the passive network element, the received optical power is significantly smaller compared to an intact fiber. The optical power $P_{RX|\lambda 1}$ of the optical receive signal $S_{RX|1}$, only consists of power portions caused by scattering effects, and the evaluation parameter $R_{eval}$ is smaller than 1, typically by a factor of 1000. In case the optical transmission link is intact, the optical signal does reach the passive network element, experiences an amplification through the excited EDF, and the optical power $P_{RX|\lambda 1}$ of the optical receive signal $S_{RX|1}$, comprises power portions caused by scattering effects in the fiber and power portions effected by the EDF. The amplification by the EDF can be so effective that the optical power $P_{RX|\lambda 1}$ of the optical receive signal $S_{RX|1}$, can be larger than the optical power $P_{in|\lambda 1}$ of the optical signal. In this case, the evaluation parameter $R_{eval}$ is larger than 1.

According to an embodiment of the invention, the method comprises further steps. The method can comprise a step of outputting, at the active network element, a second optical signal at a wavelength $\lambda_2$, or within a wavelength range $\Delta\lambda_2$ into the transmission fiber in a direction towards the passive network element. The wavelengths $\lambda_1$ and $\lambda_2$ are close enough to each other that they experience essentially the same wavelength-dependent attenuation and scattering in the transmission fiber. The second optical signal can either be generated within the active network element or be supplied to the active network element. The method can comprise a step of measuring or determining, at the active network element, relative or absolute values of the second optical power $P_{in|\lambda 2}$ of the optical signal. The method can comprise a step of reflecting, at the passive network element, a predetermined power portion of the second optical signal to form a second reflected optical signal. The second reflected optical signal can be guided back, through the optical transmission fiber, to the active network element. The method can comprise a step of measuring, at the active network element, relative or absolute values $P_{RX|\lambda 2}$ of the optical power of a second optical receive signal $S_{RX|2}$ at a wavelength $\lambda_2$ or within a wavelength range $\Delta\lambda_2$ that is received at the active network element. The method can comprise a step of determining an evaluation parameter $R_{eval2}$ that is essentially determined by the transmission characteristics of the optical transmission fiber by using measured values of the optical power $P_{RX|\lambda 1}$ and $P_{RX|\lambda 2}$ of the first and second optical receive signal and the optical power $P_{in|\lambda 1}$ and $P_{in|\lambda 2}$ of the first and second optical signal. The method can comprise a step of comparing the evaluation parameter $R_{eval}$ and/or $R_{eval2}$ with a predetermined evaluation threshold value in order to determine the integrity of the transmission fiber.

It is possible that the optical signal spans a wavelength range of approximately 35 nm, for example in a multiplexed WDM signal. Raman amplification using one pump laser however, provides different Raman gain to the different wavelengths. In fact, the amplification factor increases almost linearly with the wavelength separation between the signal and the pump. In order to smooth out the uneven amplification across the wavelength range of the optical signal, a second pump laser using a second wavelength (range) can be used for the Raman amplification. The second optical signal used as a second monitoring signal can be the second pump signal, thereby fulfilling two purposes at the same time. In this case, the optical power $P_{RX|\lambda 1}$ comprises, in addition to power portions of the amplified and reflected first optical signal received, power portions caused by backscattering within the optical transmission fiber. The optical power $P_{RX|\lambda 2}$ comprises power portions caused by backscattering within the optical transmission fiber. This power portion is comparable to the power portion in $P_{RX|\lambda 1}$ caused by backscattering. The two portions are typically not exactly identical since the scattering effects occurring in the optical transmission fiber are wavelength-dependent. It is possible that portions of the second optical signal are reflected by the passive network element through unwanted reflections, which can be caused by e.g. the connection between the transmission fiber and the third optical signal port of the passive network element. It is further possible that the optical power $P_{RX|\lambda 2}$ comprises power portions caused by reflection in the optical transmission fiber, which could be caused by inaccuracies at connecting spots of two parts of the transmission fiber or couplers. When two glass fibers are connected to continue a transmission link, the surfaces of the glass fibers are joined. It is possible that the surfaces of the glass fibers are not joined perfectly and therefore small reflections of optical signals traversing the transmission link can occur at these spots. However, the power portion of the second optical receive signal $S_{RX|2}$ caused by the aforementioned reflection effects is in most cases neglectable and not comparable to the optical power portion of $P_{RX|\lambda 1}$ purposefully amplified and reflected by the passive network element. Essentially, the optical power $P_{RX|\lambda 2}$ comprises power portions caused by backscattering within the optical transmission fiber.

The evaluation parameter $R_{eval2}$ can be determined by the calculation rule

$$R_{eval2} = \frac{R_{power|\lambda 1}}{R_{power|\lambda 2}} \tag{2}$$

wherein the generalized reflectivities $R_{power|\lambda 1}$ and $R_{power|\lambda 2}$ are determined by the calculation rules

$$R_{power|\lambda 1} = \frac{P_{RX|\lambda 1}}{P_{in|\lambda 1}} \quad \text{and} \quad R_{power|\lambda 2} = \frac{P_{RX|\lambda 2}}{P_{in|\lambda 2}} \tag{3}$$

According to an embodiment of the invention, the integrity of the transmission fiber is confirmed if the evaluation parameter $R_{eval2}$ is significantly larger than 1, preferably larger than 1.5, more preferably larger than 2, most preferably larger than 5. Obviously, this is only the case if the ratio of the generalized reflectivity $R_{power|\lambda \#}$ ($\lambda\#$ standing for either $\lambda_1$ or $\lambda_2$) of the signal which is deliberately amplified and reflected by the passive network element is in the numerator of the fraction in equation (2). If the ratio of the generalized reflectivity $R_{power|\lambda \#}$ of the signal which is deliberately amplified and reflected by the passive network element is in the denominator of the fraction in equation (2), the integrity of the transmission fiber is confirmed if the evaluation parameter $R_{eval2}$ is significantly smaller than 1, but still positive, preferably smaller than 0.5, more preferably smaller than 0.2, most preferably smaller than 0.1.

Since Raman amplification implies launching pump powers into the fiber that are typically above laser safety limits, a mechanism to check the continuity of the fiber link prior to full use of the one or more pump lasers and during operation needs to be implemented. Operating the one or more pump lasers of a Raman amplifier at high pump powers without checking the integrity of the optical fiber first could cause damage to human beings and to the transmission network.

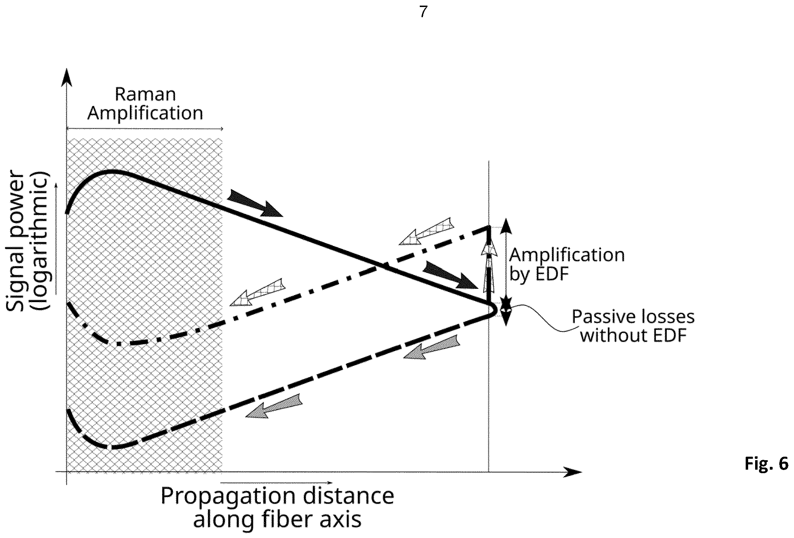

Fig. 6 illustrates the power distribution schematically for a signal propagating in an optical fiber in the presence of a pump signal. The bold curve shows power distribution of the signal experiencing Raman amplification within the first section of the fiber when propagating from the left to the right. Without an erbium-doped fiber (EDF) at the end of the fiber, the signal is reflected back into the fiber and is attenuated due to passive losses leading to the dashed curve. With an EDF placed in front of the reflector on the other hand, the optical signal experiences some additional amplification at the fiber end which is leading to the dash-dotted curve in the Figure. The residual pump power at the end of the fiber is sufficient to achieve noticeable gain since the optical signal power in the EDF is quite small.

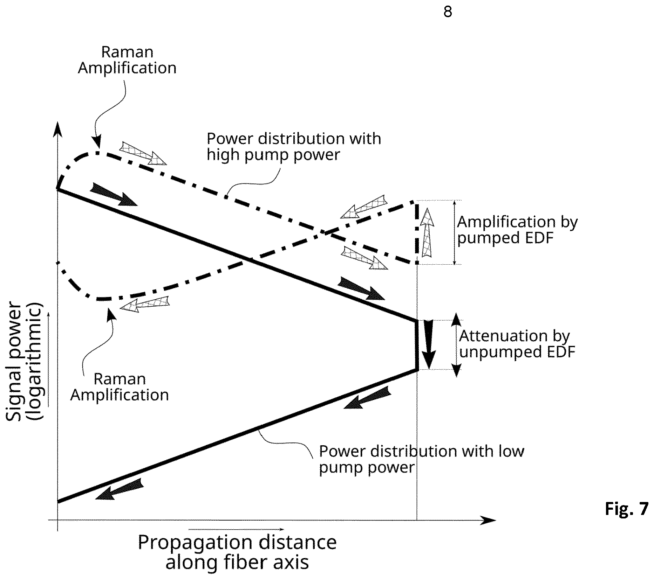

Power distribution with the EDF placed at the end of the fiber for low and high pump powers is illustrated in Fig. 7. The dash-dotted curve represents the power distribution already known from the previous consideration, i.e. with an excited EDF at the passive network element. When turning off the Raman pump, there is no Raman amplification anymore in the first fiber section. Furthermore, the now unexcited EDF coil acts as an attenuator and absorbs a major part of the optical signal power. The resulting power distribution is represented by the solid curve. As can be seen, there is a significant difference in the two cases. Not only is the optical signal for low pump powers not amplified in the first part of the optical fiber by Raman amplification, but it is additionally experiencing strong attenuation because of the attenuation characteristics of the unexcited EDF. The dependence of the received signal power on the pump power resulting in largely different situations in the transition from low pump power (pump turned off) to high pump power (pump operated at maximum power above laser safety limit) is used for ensuring laser safety.

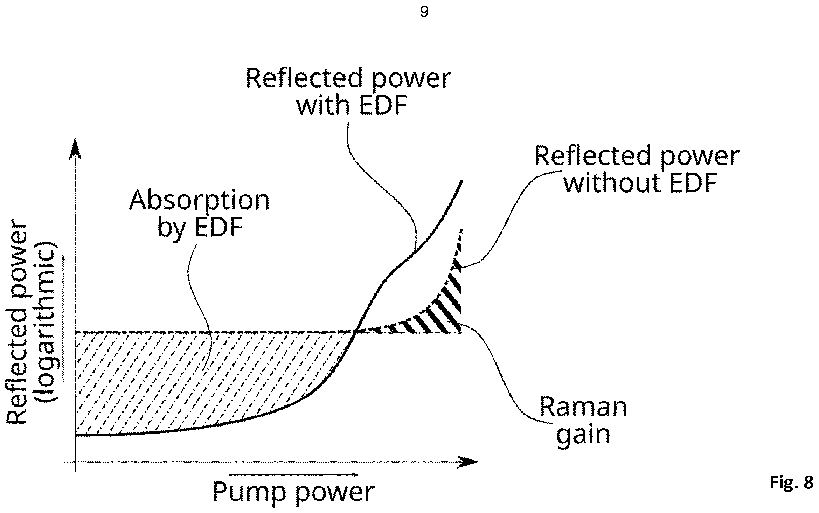

As already explained before, the optical signal suffers from strong attenuation in the unpumped EDF at the fiber end. Thus, the received signal power is very low. When increasing the pump power, the residual pump power reaching the EDF is already sufficient to induce noticeable inversion in this specialty fiber and signal attenuation is significantly reduced. Even at fiber lengths of 70 km, pump powers in the range of 50 mW and 100 mW make the EDF essentially lossless. However, Raman gain in the transmission fiber at these pump powers is still negligible. Further increasing the pump power leads to significant Raman gain that is present in both configurations, i.e. with and without EDF inserted before the reflector. In consequence, the received signal power increases with increasing pump power in both configurations at high power levels. This behavior is summarized by the illustration in Fig. 8 showing reflected power versus pump power for both configurations. In summary, the reflected power undergoes significantly larger variations when varying the pump power if the signal reaches the remotely pumped EDF. Specifically, the curve's behavior stops being linear. This feature is used to confirm integrity of the fiber link during commissioning.

That is why, according to an embodiment of the invention, prior to full use of the pump laser, the method comprises a gradual increase in the pump power of the pump signal up to a threshold value. The threshold value can be chosen according to the laser safety regulations applying to the corresponding pump laser. Please note that strongly varying the pump power is permitted when turning on the link, but no longer when commercial data transmission has already started. However, once integrity has been confirmed, it is sufficient to check for significant variations (e.g. more than $\pm 10\%$) of the received signal in order to detect a fiber cut.

Checking for this characteristic behavior can be based on various parameters. Two options will be described in the following:

1. Pump power is varied from its minimum power (e.g. zero) up to a value close to the maximum power level that is allowed to be launched into the fiber without a dedicated laser safety mechanism. The difference between the maximum and the minimum reflected power detected during this pump power variation serves as a parameter for the fiber integrity check. In other words, integrity of the fiber is confirmed if this difference exceeds a predefined threshold. For pump powers in the range from 0 mW to 100 mW, this difference should be larger than 30 dB.

2. Larger variations of the received signal powers come along with a larger slope of the curves shown in Fig. 8 in a wide range of the pump powers. Thus, the slope of the curves can be used as another parameter for checking fiber integrity.

The evaluation parameter $R_{eval}$ can be the slope of the optical power of the optical receive signal $S_{RX|1}$, that is received at the active network element. The signal strength or power level of the optical signal is measured in dBm. 0 dBm is defined as 1 mW of power into a power meter. In this way, a ratio or connection can be created between the pump power of the pump laser and the signal strength of the receive signal $S_{RX|1}$, that is received at the active network element, which could have been amplified by the pump laser (by Raman amplification) and, in case of an intact transmission link, by the excited EDF. The pump laser used for the Raman amplification of the transmission signal and the optical signal, which is a monitoring signal, does not need to be comprised by the active network element. The pump laser's pump power, however, needs to be made available to the evaluation unit of the active network element. However, please note that the pump power can also be derived from other parameters related to the pump laser such as the injection current. The amplified optical signal is then reflected, thereby creating the corresponding optical receive signal $S_{RX|1}$. In other words, the slope measures the increase in the power of the receive signal in dBm per increase in pump power of the corresponding pump laser of 1 mW.

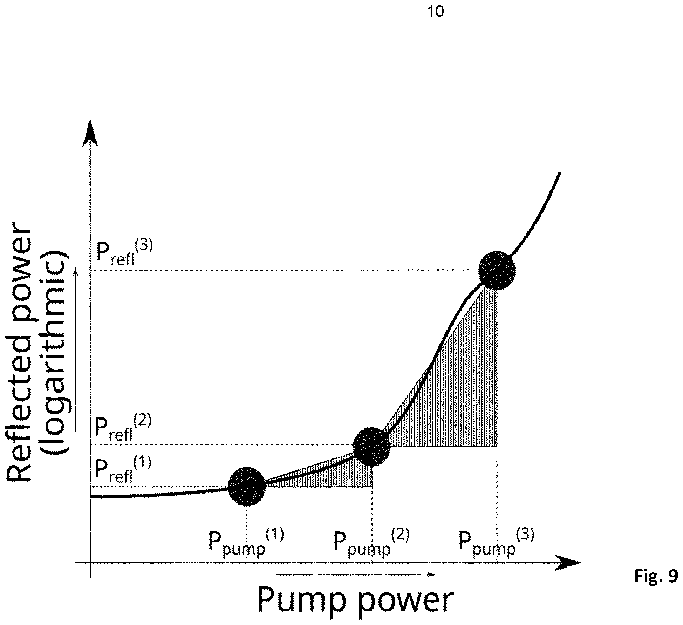

In the following, different possible approaches for calculating the slope of the curve are explained. Therefore, it is assumed that several pairs $(P_{pump}^{(i)}, P_{refl}^{(i)})$ are recorded during commissioning. The recording of these data pairs is illustrated in Fig. 9. Accordingly, in this case, the method comprises a step of measuring or receiving the values of pump power of the corresponding pump laser. The method can further comprise a step of determining the evaluation parameter $R_{eval}$ by the calculation rule:

$$R_{eval} = S^{(i)} = \frac{\left|P_{refl}^{(j)} - P_{refl}^{(i)}\right|}{\left|P_{pump}^{(j)} - P_{pump}^{(i)}\right|} \quad \text{for} \quad i \neq j \qquad (4)$$

wherein $P_{refl}^{(i)}$ and $P_{refl}^{(j)}$ are measurements corresponding to absolute values $P_{RX|\lambda 1}$ of the optical power of an optical receive signal $S_{RX|1}$ and $P_{pump}^{(j)}$ and $P_{pump}^{(i)}$ are the corresponding pump powers. The corresponding pump power refers to the pump power of the pump laser that excites the EDF in the passive network element, which in turn amplifies the optical signal. It is to be noted that this calculation can be done for any two data pairs i and j and not only for succeeding data pairs. Furthermore, $P_{pump}^{(j)}$ can even be smaller than $P_{pump}^{(i)}$. Different criteria can now be applied to verify fiber integrity. Fiber integrity is e.g. guaranteed if at least one of the calculated slopes $S^{(i)}$ values exceeds a predefined value. The optimum choice of this value depends on the fiber type used. For a standard single mode fiber, a predefined value of 0.3 dB/km or even 0.2 dB/km appears to be a good choice in practice. The predetermined evaluation threshold depends on the type of transmission fiber.

Another possibility is to fit an analytical expression such as a polynomial to the data pairs recorded when turning on the pump. The slope of this expression can be calculated with well-known mathematical techniques and its value can be determined easily over the complete range of pump powers. Furthermore, standard numerical functions, such as the "gradient" function of "Matlab", are available for calculating the slope. To get better results, known interpolation techniques such as the spline interpolation can be applied to the data pairs before calculating the gradient.

Generally, laser safety regulations allow different maximum power values for lasers depending on their wavelengths, but usually not more than 200 mW. The gradual increase in the power of the pump signal preferably happens from $10^{-1}$ mW to 10 mW, more preferably from $10^{-1}$ mW to 1 mW and most preferably from $10^{-1}$ mW to 0.5 mW. The gradual increase can be a quasi-static increase.

In case of a disrupted or damaged transmission link, the pump power does not excite the EDF in the passive network element. In this case, the monitoring signal is not amplified by the EDF and no significant increase in optical power of the receive signal per increased mW of pump power can be determined. Specifically, the linear dependence of the signal strength on the pump power stays intact. This linear dependence is indicative that the EDF is not excited. However, if the transmission link is intact, the optical signal will reach the passive network element and therefore the EDF. The EDF is not excited by the pump power if it is too low. The pump power can initially start at e.g. 0.1 mW. This is not enough to noticeably excite the EDF for a fiber length of e.g. 30 km. A non-excited EDF attenuates a regular optical signal significantly, and the optical power of the receive signal is correspondingly low. With increasing pump power, however, the amplification of the monitoring signal (which is the optical signal) increases steeply. A significant increase in optical power of the receive signal per increased mW of pump power can be determined, i.e. the linear behavior of the system is interrupted. In this way, the integrity of the transmission link can be confirmed before increasing the power level of a pump laser beyond laser safety limits. After the integrity was confirmed and the transmission link is in normal use with high pump powers, the determination of the evaluation parameter can be switched. It is e.g. possible to use the evaluation parameter according to equation (4) during the integrity confirmation process before use of the transmission link and the evaluation parameter according to equations (1) and/or (2) during regular use of the transmission link. Regular use means the pump lasers are operating at power levels beyond laser safety limits as is e.g. necessary for Raman amplification. The method can therefore comprise a step of determining the evaluation parameter $R_{eval}$ regularly. The method can comprise a step of determining the evaluation parameter $R_{eval}$ in predetermined intervals. The method can comprise a step of comparing evaluation parameters $R_{eval}^{(i)}$ and $R_{eval}^{(j)}$ regularly, wherein $R_{eval}^{(i)}$ and $R_{eval}^{(j)}$ can be consecutively determined evaluation parameters. The method can comprise a step of using evaluation parameters $R_{eval}^{(i)}$ and $R_{eval}^{(j)}$ to determine a characteristic of the system, wherein a change from a linear characteristic to a non-linear characteristic indicates the integrity of the transmission link. A linear characteristic can be a linear dependence of the absolute values $P_{RX|\lambda 1}$ of the optical power of the optical receive signal $S_{RX|1}$ on the corresponding pump power. The corresponding pump power refers to the pump power of the pump laser that excites the EDF in the passive network element. For example, the linear characteristic of the system can be considered changed to a non-linear characteristic for a difference between $P_{refl}^{(i)}$ and $P_{refl}^{(j)}$ of 30 dB or more for a variation of the corresponding pump powers in the range from 0 mW to 100 mW.

From the description and in particular from equation (4) follows that monitoring the signal power $P_{in}$ actually launched into the fiber is not required if this power can be assumed to be essentially constant when varying the pump power. Preferably, the launch power of the signal does not vary by more than 3dB, more preferably not more than 1 dB, and even more preferably by not more than 0.5 dB. Techniques for ensuring the validity of this assumption will be summarized in the following under the term "controlling" the signal power. For example, good stability of the signal power generated within the network element can be achieved by simply stabilizing the injection current of the laser diode.

In case of larger variations of the signal power during varying the pump power, normalizing the received signal power to its launch power and to replace equation (4) by

$$R_{eval} = S^{(i)} = \frac{\left| \frac{P_{refl}^{(j)}}{P_{in}^{(j)}} - \frac{P_{refl}^{(i)}}{P_{in}^{(i)}} \right|}{\left| P_{pump}^{(j)} - P_{pump}^{(i)} \right|} \quad \text{for} \; i \neq j \qquad (5)$$

results in improved accuracy and reliability. In fact, this is only one possible mathematical representation of the same mathematical operation. The key point is that the slope is calculated for the round-trip gain

$$P_{refl}^{(i)}/P_{in}^{(i)} \text{ and } P_{refl}^{(j)}/P_{in}^{(j)},$$

respectively. According to an embodiment of the invention, the wavelengths $\lambda_1$ and $\lambda_2$ of the first and second optical signal are chosen such that they encounter a wavelength-dependent attenuation, caused by the optical transmission fiber, that does not differ by more than a predetermined threshold value, wherein the predetermined threshold value is preferably less than 0.5 dB, more preferably less than 0.2 dB and most preferably less than 0.1 dB in case of the twofold length of the optical transmission fiber. This ensures that the measurement values are properly usable. If the wavelengths are too far apart, the optical signals experience wavelength-dependent phenomena, like attenuation and amplification, with varying intensity, possibly rendering a comparison useless.

According to an embodiment of the invention, the pump signal is a pump signal adapted to effect Raman amplification within the optical transmission fiber. The pump laser can be comprised in the active network element. It is possible to remotely pump the optical signal without the need for a pump laser in the active network element by remote optically pumped amplifier (ROPA). In this case, the pump signal for Raman amplification can be created outside of the active network element. Generally, it traverses along the optical transmission link.

According to an embodiment of the invention, the optical power of the optical signal is periodically amplitude-modulated, preferably by a sinusoidal signal having a predetermined modulation frequency, and the modulation frequency is chosen in such a way that the evaluation parameter $R_{eval}$ is at a maximum in case of existing fiber integrity. The modulation can also be done using a different function, e.g. a cosine.

According to the invention, the active network element for monitoring fiber integrity in an optical transmission link comprises a first optical signal port which is connectable to a first end of the optical transmission fiber. The first optical signal port is connected to an internal optical path. The active network element further comprises a first optical transceiver which is configured to, in case the first optical signal at wavelength $\lambda_1$ is not supplied to the active network element, create and couple the first optical signal at the wavelength $\lambda_1$ into the optical path by means of an optical coupling device and to receive, via the optical coupling device, the first optical receive signal $S_{RX|1}$, that is received at the first optical signal port if the first optical signal port is connected, via the optical transmission fiber, to the passive network element. The first optical transceiver is further configured to, in case the first optical signal at wavelength $\lambda_1$ is supplied to the active network element, receive via the optical coupling device, the first optical signal at wavelength $\lambda_1$ and couple the first optical signal at the wavelength $\lambda_1$ into the optical path by means of an optical coupling device and to receive, via the optical coupling device, the first optical receive signal $S_{RX|1}$, that is received at the first optical signal port if the first optical signal port is connected, via the optical transmission fiber, to the passive network element. The first optical transceiver is further configured to measure relative or absolute values of the optical power $P_{in|\lambda 1}$ of the first optical signal and relative or absolute values $P_{RX|\lambda 1}$ of the optical power of a first optical receive signal $S_{RX|1}$. In other words, the active network element does not need to create the one or more monitoring signals itself. This has the advantage that an active network element according to the invention can be manufactured cheaply and be implemented in transmission links with existing signals that can be used as optical monitoring signals.

According to an embodiment of the invention, the active network element further comprises a second optical signal source which is configured to create and couple a pump signal suitable to pump an EDF in a passive network element into the optical path by means of the optical coupling device if the first optical signal port is connected, via the optical transmission fiber, to the passive network element. The optical pump signal can further be configured to optically pump an optical signal via Raman amplification. In this embodiment, there is no need for an external pump laser. This active network element can be implemented in existing transmission links that lack the necessary pump laser.

According to an embodiment of the invention, the active network element further comprises an evaluation unit which is configured to determine the evaluation parameter $R_{eval}$ using the values measured by the first optical transceiver. In this embodiment, the evaluation is done in the active network element directly without the need for an external evaluation unit.

According to an embodiment of the invention, the active network element further comprises a transmission unit which is configured to transmit any measurement or evaluation data acquired by the active network element. In this way, e.g. a warning can be issued to one or multiple devices in case the transmission link is not safe to use. It is also possible to configure the active network element with the transmission unit, but without the evaluation unit. In this case, the measurement data would be sent to an external evaluation unit. The active network element could be manufactured more cheaply.

According to an embodiment of the invention, the active network element further comprises a second optical signal port which is connectable to a further optical transmission fiber, wherein the optical coupling device is configured to pass through an optical transmission signal received at the second optical signal port to the first optical signal port and vice versa. In this way, the active network element can be implemented at any position within an optical transmission link.

According to the invention, the system for monitoring fiber integrity in an optical transmission link comprises an active network element according to the invention. The system further comprises a passive network element comprising a third optical signal port which is connectable to a second end of the optical transmission fiber, an EDF configured to amplify the optical signal at a wavelength $\lambda_1$ or within a wavelength range $\Delta\lambda_1$, and a reflection device configured to reflect the optical signal and to feed the reflected power portion to the third optical signal port in the direction of the active network element. The system further comprises an evaluation unit configured to determine the evaluation parameter $R_{eval}$ using the measured values and to use the evaluation parameter $R_{eval}$ to determine the integrity of the optical transmission fiber.

According to an embodiment of the invention, the passive network element comprises a fourth optical signal port which is connectable to a further optical transmission fiber and the passive network element is configured to pass through, via an optical path, an optical transmission signal received at the third optical signal port to the fourth optical signal port and vice versa, wherein the passive network element is configured to, in case the first optical signal at wavelength $\lambda_1$ is not supplied to the active network element, dissipate all optical power of the optical signal apart from the reflected optical power portion of the optical signal.

In this way, the system can be implemented in any system already in use. In an optical transmission link, more systems comprising an active and passive network element at two ends of an optical transmission fiber can follow in series. In such cases, it is important that the monitoring signals of one system do not interfere with the monitoring signals of another system to ensure reliability of the monitoring method implemented by each system. The passive network element dissipating all optical power of the first and second optical signals apart from the reflected optical power portion of the first optical signal ensures that the following and previous systems' monitoring signals are not disturbed.

Embodiments of the invention will now be described with reference to the drawings. In the drawings,

Fig. 1    shows a schematic structure of a device for monitoring fiber integrity in an optical transmission link according to the invention;

Fig. 2    shows a schematic structure of a device for monitoring fiber integrity in an optical transmission link with an external evaluation unit according to the invention;

Fig. 3    shows a schematic structure of a device for monitoring fiber integrity in an optical transmission link according to an embodiment of the invention;

Fig. 4a    shows a diagram illustrating the rise in received power for an increase in pump power for a transmission fiber length of 10 km;

Fig. 4b    shows a diagram illustrating the rise in received power for an increase in pump power for a transmission fiber length of 30 km;

Fig. 4c    shows a diagram illustrating the rise in received power for an increase in pump power for a transmission fiber length of 50 km;

Fig. 4d    shows a diagram illustrating the rise in received power for an increase in pump power for a transmission fiber length of 70 km;

Fig. 5    shows a diagram illustrating the slopes in dB/mW depending on the fiber length monitored;

Fig. 6    shows the power distribution of a signal in an optical fiber in the presence of a strong pump signal with and without an EDF placed before the reflector;

Fig. 7    shows the power distribution of a signal in an optical fiber with an EDF placed before the reflector at the fiber end for very low and high pump powers;

Fig. 8    shows the received signal power for configurations with and without an erbium-doped fiber (EDF) placed in front of the reflector; and

Fig. 9    shows some recording pairs ($P_{pump}^{(i)}$, $P_{refl}^{(i)}$) of received signal strength and corresponding pump power.

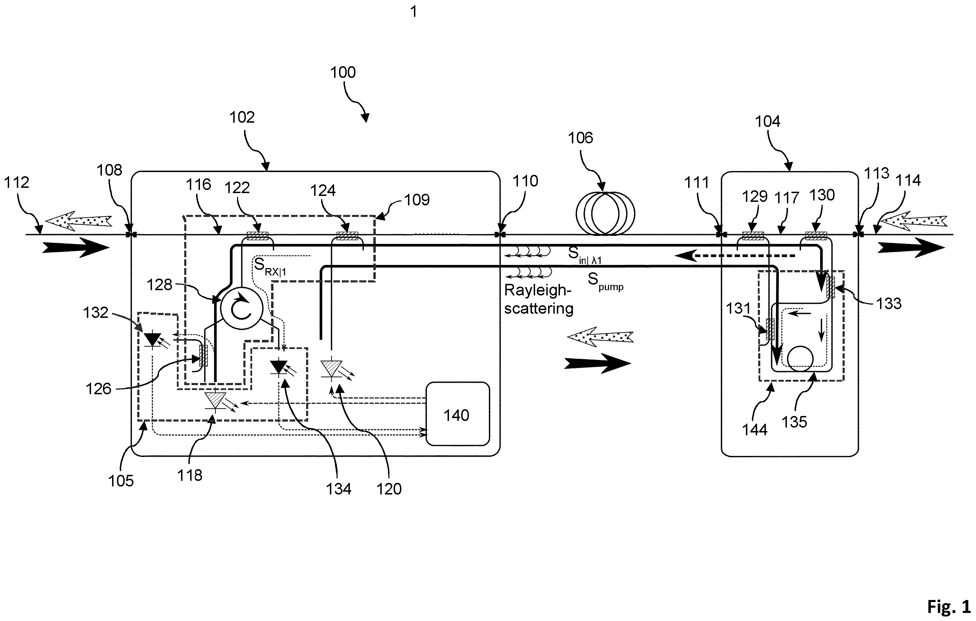

In the following, embodiments according to the invention will be explained. Fig. 1 shows a schematic structure of a system 100 for monitoring fiber integrity in an optical transmission link. The system comprises an active network element 102 and a passive network element 104. Between the active and passive network element, a first end of an optical transmission fiber 106 is coupled into the first optical signal port 110 at the active network element 102, and a second end of the optical transmission fiber 106 is coupled into the third optical signal port 111 at the passive network element 104. An optical transmission fiber 112 and 114 is coupled into the second optical signal port 108 and the fourth optical signal port 113, respectively, to continue the data transfer along the optical transmission link.

In the active network element 102, the second optical signal port 108 and the first optical signal port 110 are connected by an optical path 116. The optical path 116 is configured to ensure a transfer of optical signals from the second optical signal port 108 to the first optical signal port 110 and vice versa. The active network element 102 comprises an optical coupling device 109 (dotted lines), which comprises a first, second, third and fourth coupling device 122, 124, 126 and 128. The active network element 102 further comprises a first optical transceiver 105 (dotted lines), which comprises a first optical signal source 118, a first measurement device 132 and a second measurement device 134. The active network element 102 further comprises a second optical signal source 120.

Along the optical path 116, the first coupling device 122 and the second coupling device 124 are connected to the optical path 116. The first coupling device 122 and the second coupling device 124 are configured to couple optical signals into the optical path 116 and to decouple optical signals out of the optical path 116.

The first coupling device 122 is connected to the fourth coupling device 128 via another optical path. In this embodiment, the fourth coupling device 128 is configured as an optical circulator, but it can be configured as any means capable of coupling and decoupling optical signals from one optical path into another. The fourth coupling device 128 is connected to the third coupling device 126 and the second measurement device 134 via optical paths. The third coupling device 126 is connected to the first measurement device 132 and the first optical signal source 118 via optical paths. All measurement devices in the active network element 102 can be configured as photo diodes or any other means capable of measuring optical signals. The first optical signal source 118 can be configured as a laser or any other means capable of emitting an optical signal.

The second coupling device 124 is connected to the second optical signal source 120 via an optical path. The second optical signal source 120 can be configured as a laser or any other means capable of emitting an optical signal. All measurement devices in the active network element 102, namely, the first and second measurement devices 132 and 134 are connected to an evaluation unit 140. The evaluation unit 140 can be configured as any means capable of executing computing steps, receiving and sending signals and evaluating data, e.g. a computer or any other electronical device comprising appropriate hardware and software.

In the passive network element 104, the third optical signal port 111 and the fourth optical signal port 113 are connected by an optical path 117. The optical path 117 is configured to ensure a transfer of optical signals from the third optical signal port 111 to the fourth optical signal port 113 and vice versa. Along the optical path 117, a fifth and sixth coupling device 129 and 130 are connected to the optical path 117. The fifth coupling device 129 is configured to decouple optical signals out of the optical path 117 towards a reflection device 144. The sixth coupling device 130 is configured to couple optical signals into the optical path 117 from reflection device 144 and to decouple optical signals out of the optical path 117 towards reflection device 144. The reflection device 144 comprises a seventh and eighth coupling device 131 and 133 and an EDF 135. The fifth coupling device 129 is connected to seventh coupling device 131 via an optical path. The sixth coupling device 130 is connected to an eighth coupling device 133 via an optical path. The EDF 135 is configured as a closed loop and connected to seventh and eighth coupling devices 131 and 133. The reflection device 144 can additionally comprise a mirror or a wavelength-dependent mirror or any other means capable of reflecting optical signals.

In the embodiment of the invention shown in Fig. 1, an optical signal is traversing along the optical transmission fiber 112. It enters the active network element 102 through the second optical signal port 108 and traverses towards the first optical signal port 110 along the optical path 116.

The first optical signal source 118 emits an optical signal $S_{in|\lambda1}$ at wavelength $\lambda_1$ which serves as a monitoring signal and traverses from the first optical signal source 118 to the third coupling device 126. At the third coupling device 126, a small power portion of the optical signal $S_{in|\lambda1}$ at wavelength $\lambda_1$ is decoupled and transmitted to the first measurement device 132 via an optical path. Typically, the decoupled power portion is about 2% to 5% of the total signal power. The first measurement device 132 measures the optical power $P_{in|\lambda1}$ of the optical signal $S_{in|\lambda1}$ at wavelength $\lambda_1$. It then transmits the measurement data to the evaluation unit 140. The main portion of the optical signal $S_{in|\lambda1}$ at wavelength $\lambda_1$, which has not been decoupled by the third coupling device 126, traverses from the third coupling device 126 to the fourth coupling device 128. From the fourth coupling device 128, the signal traverses to the first coupling device 122 and is coupled into the optical path 116 towards the first optical signal port 110.

The second optical signal source 120 emits an optical pump signal $S_{pump}$ at wavelength $\lambda_{pump}$ which is configured to effect Raman amplification for optical signal $S_{in|\lambda1}$ and to excite EDF 135. The optical pump signal $S_{pump}$ traverses from

the second optical signal source 120 to the second coupling device 124 and is coupled into the optical path 116 towards the first optical signal port 110. The second optical signal source 120 is configured as a pump laser.

The optical transmission signal, which entered the active network element 102 through the second optical signal port 108, is multiplexed with the optical signal $S_{in|\lambda 1}$ at wavelength $\lambda_1$ by the first coupling device 122.

The multiplexed signal and the optical pump signal $S_{pump}$ are then coupled into the optical transmission fiber 106 in the direction towards the passive network element 104 by the first optical signal port 110. The multiplexed signal is amplified by the optical pump signal $S_{pump}$ via the effect of Raman amplification. The signals traverse along the optical transmission fiber 106 to the passive network element 104 and are coupled into the optical path 117 by the third optical signal port 111. During the transmission from the active network element 102 to the passive network element 104, the signals experience Rayleigh scattering and other types of scattering which direct a portion of the signals back to the active network element 102.

The fifth coupling device 129 decouples the optical pump signal $S_{pump}$ from the optical path 117 to the reflection device 144. The seventh coupling device 131 couples the optical pump signal $S_{pump}$ into the EDF 135. The sixth coupling device 130 decouples a power portion of the optical signal $S_{in|\lambda 1}$ at a wavelength $\lambda_1$ from the optical path 117 to the reflection device 144. The eighth coupling device 133 couples the optical signal $S_{in|\lambda 1}$ at a wavelength $\lambda_1$ into the EDF 135. The EDF is excited by the optical pump signal $S_{pump}$ and in turn amplifies the optical signal $S_{in|\lambda 1}$. The reflection device 144 then, after amplifying the optical signal $S_{in|\lambda 1}$, couples the optical signal $S_{in|\lambda 1}$ back to the sixth coupling device 130, which couples it into the optical path 117 in the direction back towards the active network element 102, thereby creating the optical receive signal $S_{RX|1}$ at wavelength $\lambda_1$. In this embodiment of the invention, the reflection device 144 only reflects the first optical signal at wavelength $\lambda_1$ and not the optical pump signal $S_{pump}$.

The optical receive signal $S_{RX|1}$ at wavelength $\lambda_1$ traversing in a direction from the passive network element 104 towards the active network element 102 is coupled into the optical path 116 by the first optical signal port 110. The optical receive signal $S_{RX|1}$ at wavelength $\lambda_1$ comprises, in addition to the power portions of the amplified and reflected first optical signal, power portions caused by backscattering, such as Rayleigh scattering, within the optical transmission fiber.

The first optical receive signal $S_{RX|1}$, at wavelength $\lambda_1$ is decoupled by the first coupling device 122 from the optical path 116 and transmitted to the fourth coupling device 128. The first optical receive signal $S_{RX|1}$, at wavelength $\lambda_1$ is then decoupled by the fourth coupling device 128 from the optical path and transmitted to the second measurement device 134 via an optical path. The second measurement device 134 measures the optical power $P_{RX|\lambda 1}$ of the first optical receive signal $S_{RX|1}$. It then transmits the measurement data to the evaluation unit 140.

The evaluation unit 140 determines an evaluation parameter $R_{eval}$ that is essentially determined by the transmission characteristics of the optical transmission fiber by using the measured values of the optical power $P_{in|\lambda 1}$ of the optical signal $S_{in|\lambda 1}$ and $P_{RX|\lambda 1}$ of the optical receive signal $S_{RX|1}$. The evaluation parameter $R_{eval}$ is then compared to a predetermined evaluation threshold value in order to determine the integrity of the transmission fiber.

The result is then transmitted to the second optical signal source 120. By this, it is signaled that it is safe to launch pump powers into the fiber that are typically above laser safety limits.

According to an embodiment of the invention, the active network element 102 comprises a third and fourth measurement device (not depicted). The measurement devices are positioned between the second optical signal source 120 and the second coupling device 124 in Fig. 1. The third measurement device is configured to measure the optical power $P_{in|\lambda 2}$ of a second optical signal $S_{in|\lambda 2}$ at wavelength $\lambda_2$. It then transmits the measurement data to the evaluation unit 140. The main portion of the optical signal $S_{in|\lambda 2}$ at wavelength $\lambda_2$, which has not been decoupled to be measured by the third measurement device, traverses to the second coupling device 124 and is coupled into the optical path 116 towards the first optical signal port 110. The rest of the embodiment is configured according to the first embodiment described with regard to Fig. 1. The second optical signal $S_{in|\lambda 2}$ at wavelength $\lambda_2$ is not amplified or purposefully reflected at the passive network element. Its corresponding second optical receive signal $S_{RX|2}$ at wavelength $\lambda_2$ only comprises power portions caused by scattering effects in the transmission link like e.g. Rayleigh scattering. The optical receive signal $S_{RX|2}$ at wavelength $\lambda_2$ traversing in a direction from the passive network element 104 towards the active network element 102 is coupled into the optical path 116 by the first optical signal port 110, like the first optical receive signal $S_{RX|1}$. The second optical receive signal $S_{RX|2}$ is decoupled by the second coupling device 124 from the optical path 116 and transmitted to the fourth measurement device via an optical path. The fourth measurement device measures the optical power $P_{RX|\lambda 2}$ of the second optical receive signal $S_{RX|2}$. It then transmits the measurement data to the evaluation unit 140.

The evaluation unit 140 determines an evaluation parameter $R_{eval}$ that is essentially determined by the transmission characteristics of the optical transmission fiber by using the measured values of the optical power $P_{in|\lambda 1}$ of the first optical signal $S_{in|\lambda 1}$, $P_{RX|\lambda 1}$ of the first optical receive signal $S_{RX|1}$, $P_{in|\lambda 2}$ of the second optical signal $S_{in|\lambda 2}$, and $P_{RX|\lambda 2}$ of the second optical receive signal $S_{RX|2}$. The evaluation parameter $R_{eval}$ is then compared to a predetermined evaluation threshold value in order to determine the integrity of the transmission fiber.

The result is then transmitted to the second optical signal source 120. By this, it is signaled that it is safe to launch pump powers into the fiber that are typically above laser safety limits.

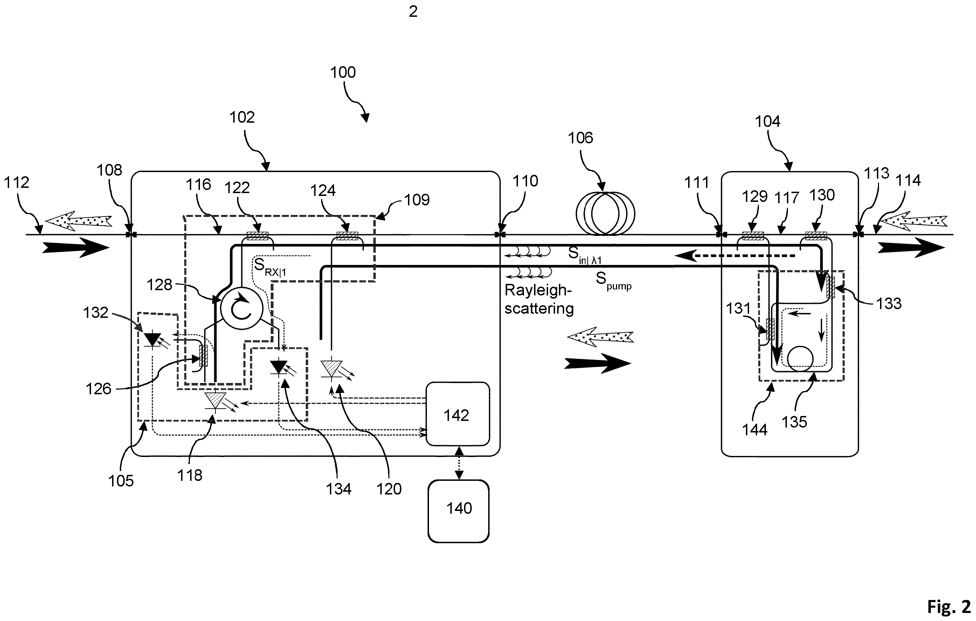

Fig. 2 shows a schematic structure of a system 100 for monitoring fiber integrity in an optical transmission link. The difference to the embodiment shown in Fig. 1 is that the evaluation unit 140 is not comprised in the active network element 102. Instead, the active network element 102 comprises a transmission unit 142, which is configured to receive the measurement values from the first optical transceiver 105, i.e. the measurement data of the first and second measurement device 132 and 134, and to transmit the data to an external evaluation unit 140. The transmission unit 142 can use the transmission link (which is monitored by the system 100) to transmit the data to the evaluation unit 140 or any other method of transmitting data. The transmission unit 142 is further configured to receive data from the external evaluation unit 140 and to transmit data to the first and second optical signal source 118 and 120. The other elements of the system function analogously to the embodiment described in Fig. 1.

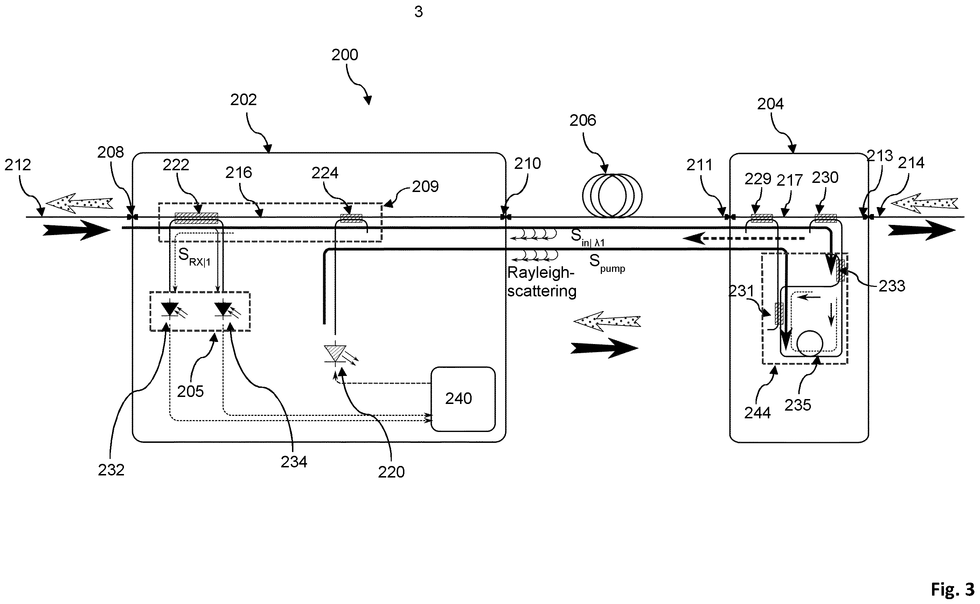

Fig. 3 shows a schematic structure of a system 200 for monitoring fiber integrity in an optical transmission link. The system comprises an active network element 202 and a passive network element 204. Between the active and passive network element, a first end of an optical transmission fiber 206 is coupled into the first optical signal port 210 at the active network element 202, and a second end of the optical transmission fiber 206 is coupled into the third optical signal port 211 at the passive network element 204. An optical transmission fiber 212 and 214 is coupled into the second optical signal port 208 and the fourth optical signal port 213, respectively, to continue the data transfer along the optical transmission link.

In the active network element 202, the second optical signal port 208 and the first optical signal port 210 are connected by an optical path 216. The optical path 216 is configured to ensure a transfer of optical signals from the second optical signal port 208 to the first optical signal port 210 and vice versa. The active network element 202 comprises an optical coupling device 209 (dotted lines), which comprises a first and second coupling device 222 and 224. The active network element 202 further comprises a first optical transceiver 205 (dotted lines), which comprises a first measurement device 232 and a second measurement device 234. The active network element 202 further comprises an optical signal source 220.

Along the optical path 216, the first coupling device 222 and the second coupling device 224 are connected to the optical path 216. The first coupling device 222 and the second coupling device 224 are configured to couple optical signals into the optical path 216 and to decouple optical signals out of the optical path 216.

The first coupling device 222 is connected to the first measurement device 232 and the second measurement device 234 via optical paths. All measurement devices in the active network element 202 can be configured as photo diodes or any other means capable of measuring optical signals.

The second coupling device 224 is connected to the optical signal source 220 via an optical path. The second optical signal source 220 can be configured as a laser or any other means capable of emitting an optical signal. All measurement devices in the active network element 202, namely, the first and second measurement devices 232 and 234, are connected to an evaluation unit 240. The evaluation unit 240 can be configured as any means capable of executing computing steps, receiving and sending signals and evaluating data, e.g. a computer or any other electronic device comprising appropriate hardware and software.

The passive network element 204 is configured identically to the passive network element 104 of the first and second embodiment shown in Figs. 1 and 2.

In the embodiment of the invention shown in Fig. 3, an optical signal $S_{in|\lambda 1}$ is traversing along the optical transmission fiber 212. It enters the active network element 202 through the second optical signal port 208 and traverses towards the first optical signal port 210 along the optical path 216. It is important to note that this signal is not the transmission signal, but a monitoring signal which was not created in the active network element 202. It could e.g. have been created in an active network element which is positioned before the active network element 202 in the transmission link.

At the first coupling device 222, a small power portion of the optical signal $S_{in|\lambda 1}$ at wavelength $\lambda_1$ is decoupled and transmitted to the first measurement device 232 via an optical path. Typically, the decoupled power portion is about 2% to 5% of the total signal power. The first measurement device 232 measures the optical power $P_{in|\lambda 1}$, of the optical signal $S_{in|\lambda 1}$ at wavelength $\lambda_1$. It then transmits the measurement data to the evaluation unit 240. The main portion of the optical signal $S_{in|\lambda 1}$ at wavelength $\lambda_1$, which has not been decoupled by the first coupling device 222, traverses from the first coupling device 222 to the first optical signal port 210.

The optical signal source 220 emits an optical pump signal $S_{pump}$ at wavelength $\lambda_{pump}$ which is configured to effect Raman amplification for optical signal $S_{in|\lambda 1}$ and to excite EDF 235. The optical pump signal $S_{pump}$ traverses from the second optical signal source 220 to the second coupling device 224 and is coupled into the optical path 216 towards the first optical signal port 210. The second optical signal source 220 is configured as a pump laser.

The optical signal $S_{in|\lambda 1}$ and the optical pump signal $S_{pump}$ are then coupled into the optical transmission fiber 206 in the direction towards the passive network element 204 by the first optical signal port 210. The multiplexed signal is amplified by the optical pump signal $S_{pump}$ via the effect of Raman amplification. The signals traverse along the optical transmission fiber 206 to the passive network element 204 and are coupled into the optical path 217 by the third optical signal port 211. During the transmission from the active network element 202 to the passive network element 204, the signals experience Rayleigh scattering and other types of scattering which direct a portion of the signals back to the active network element 202.

The fifth coupling device 229 decouples the optical pump signal $S_{pump}$ from the optical path 217 to the reflection device 244. The seventh coupling device 231 couples the optical pump signal $S_{pump}$ into the EDF 235. The sixth coupling device 230 decouples a power portion of the optical signal $S_{in|\lambda 1}$ at a wavelength $\lambda_1$ from the optical path 217 to the reflection device 244. The eighth coupling device 233 couples the optical signal $S_{in|\lambda 1}$ at a wavelength $\lambda_1$ into the EDF 235. The EDF is excited by the optical pump signal $S_{pump}$ and in turn amplifies the optical signal $S_{in|\lambda 1}$. The reflection device 244 then, after amplifying the optical signal $S_{in|\lambda 1}$, couples the optical signal $S_{in|\lambda 1}$ back to the sixth coupling device 230, which couples it into the optical path 217 in the direction back towards the active network element 202, thereby creating the optical receive signal $S_{RX|1}$ at wavelength $\lambda_1$. In this embodiment of the invention, the reflection device 244 only reflects the first optical signal at wavelength $\lambda_1$ and not the optical pump signal $S_{pump}$.

The optical receive signal $S_{RX|1}$ at wavelength $\lambda_1$ traversing in a direction from the passive network element 204 towards the active network element 202 is coupled into the optical path 216 by the first optical signal port 210. The optical receive signal $S_{RX|1}$ at wavelength $\lambda_1$ comprises, in addition to the power portions of the amplified and reflected first optical signal, power portions caused by backscattering, such as Rayleigh scattering, within the optical transmission fiber.

The first optical receive signal $S_{RX|1}$ at wavelength $\lambda_1$ is decoupled by the first coupling device 222 from the optical path 216 and transmitted to the second measurement device 234 via an optical path. The second measurement device 234 measures the optical power $P_{RX|\lambda 1}$ of the first optical receive signal $S_{RX|1}$. It then transmits the measurement data to the evaluation unit 240.

The evaluation unit 240 determines an evaluation parameter $R_{eval}$ that is essentially determined by the transmission characteristics of the optical transmission fiber by using the measured values of the optical power $P_{in|\lambda 1}$ of the optical signal $S_{in|\lambda 1}$ and $P_{RX|\lambda 1}$ of the optical receive signal $S_{RX|1}$. The evaluation parameter $R_{eval}$ is then compared to a predetermined evaluation threshold value in order to determine the integrity of the transmission fiber.

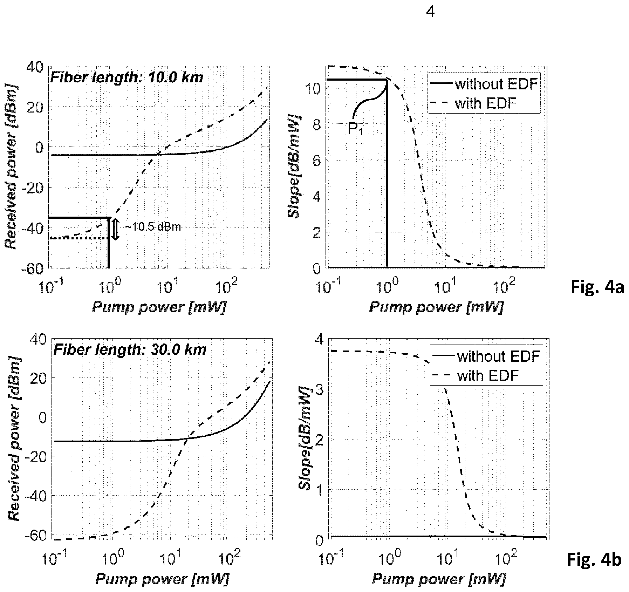

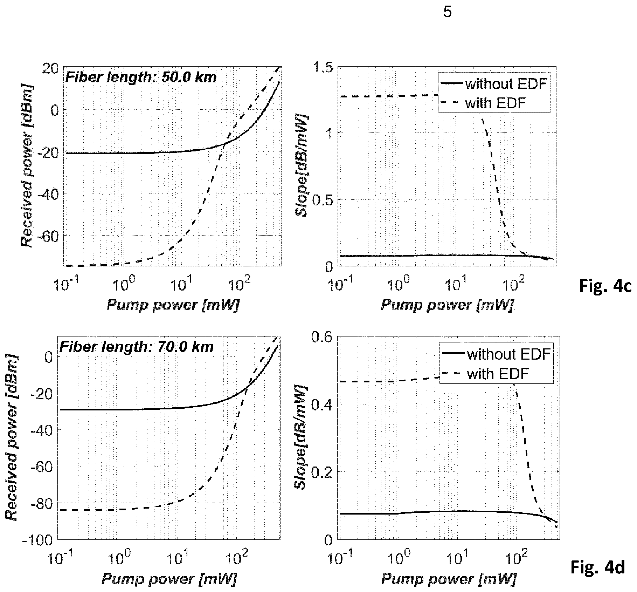

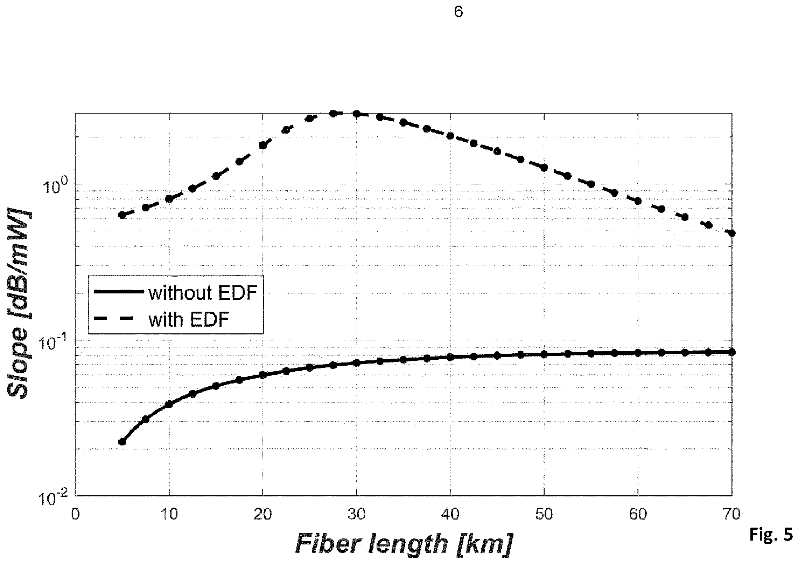

The result is then transmitted to the optical signal source 220. By this, it is signaled that it is safe to launch pump powers into the fiber that are typically above laser safety limits. This embodiment can also be realized with an external evaluation unit 240 and an internal transmission unit 142, just like the embodiment depicted in Fig. 2. The evaluation process is further explained using Figs. 4a to 4d and Fig. 5.

Figs. 4a to 4d show two different plots for each of the different transmission fiber lengths. The left plot shows the power of the optical receive signal $S_{RX|1}$, in dBm vs the pump power of the pump laser in mW. The curve depicted as the dotted line represents the received power of an optical signal which was amplified by an EDF according to the invention. The signal traversed from the active network element 102, 202 to the passive network element 104, 204 and back. The signal was amplified by the EDF in the passive network element 104, 204. The curve depicted by the solid line represents the received power of an optical signal which was not amplified by an EDF. Since both signals are optical signals serving as monitoring signals, it can be assumed they were pumped by the pump laser using Raman amplification. As can be seen in Fig. 4a, the dotted line starts at around -46 dBm for 0.1 mW pump power, whereas the solid line starts at around -4 dBm. In this case, it is assumed that the signal represented by the dotted line reached the passive network element and entered the EDF. At 0.1 mW pump power, however, the pump laser does not provide enough power to excite the EDF. A non-excited EDF acts as a very strong attenuator for an optical signal depending on the wavelength. This is a reason why the received power of the optical receive signal $S_{RX|1}$, is so much lower with the EDF.

The right plot in Figs. 4a to 4d shows the slope of the received power of the optical receive signal $S_{RX|1}$, in dB/mW vs the pump power of the pump laser in mW. The curve depicted as the dotted line represents the slope of the received power of an optical signal which was amplified by an EDF according to the invention. The signal traversed from the active network element 102, 202 to the passive network element 104, 204 and back. The signal was amplified by the EDF in the passive network element 104, 204. The curve depicted by the solid line represents the received power of an optical signal which was not amplified by an EDF. Since both signals are optical signals serving as monitoring signals, it can be assumed they were pumped by the pump laser using Raman amplification. As can be seen in Fig. 4a, the dotted line starts at around 11 dB/mW for 0.1 mW pump power, whereas the solid line starts at around 0 dB/mW and remains there essentially. In this case, it is assumed that the signal represented by the dotted line reached the passive network element and entered the EDF.

Comparing the received powers for 0.1 mW and 1 mW pump power in the left plot of Fig. 4a results in a difference of about 10.5 dBm. This difference can be found in $P_1$ of the right plot of Fig. 4a. The received power rose from -46 dBm to -35.5 dBm during an increase in pump power of essentially 1 mW. That is why the slope which is measured in dB per mW results in a value of about 10.5 dB/mW. The slope of the solid line essentially remains 0 during the increase in pump power from 0.1 mW to >100 mW which is far beyond laser safety regulations. This steep rise in received power for an increase in pump power at such low levels of < 1 mW makes it an ideal candidate for the evaluation parameter $R_{eval}$ before the transmission link is in use. For these reasons, the method is ideal for ensuring the transmission link is intact before increasing the pump power beyond laser safety regulations.

**EP 4 730 671 A1**

Fig. 5 shows the slope of the received power of the optical receive signal $S_{RX|1}$, in dB/mW vs fiber length of transmission fiber 106, 206. As can be seen from the plot, the method works best for fiber lengths of about 30 km.

**List of Reference Signs**

| | |
|---|---|
| 100, 200 | optical transmission link |
| 102, 202 | active network element |
| 104, 204 | passive network element |
| 105, 205 | first optical transceiver |
| 109, 209 | optical coupling device |
| 106, 206 | optical transmission fiber |
| 112, 212 | optical transmission fiber |
| 114, 214 | optical transmission fiber |
| 110, 210 | first optical signal port |
| 108, 208 | second optical signal port |
| 111, 211 | third optical signal port |
| 113, 213 | fourth optical signal port |
| 116, 216 | optical path |
| 117, 217 | optical path |
| 118, 218 | first optical signal source |
| 120, 220 | second optical signal source |
| 122, 222 | first coupling device |
| 124, 224 | second coupling device |
| 126 | third coupling device |
| 128 | fourth coupling device |
| 129, 229 | fifth coupling device |
| 130, 230 | sixth coupling device |
| 131, 231 | seventh coupling device |
| 132, 232 | first measurement device |
| 133, 233 | eighth coupling device |
| 134, 234 | second measurement device |
| 135, 235 | EDF (erbium-doped fiber) |
| 140, 240 | evaluation unit |
| 142 | transmission unit |
| 144, 244 | reflection device |

| | |
|---|---|
| $S_{in|\lambda 1}$ | first optical signal at wavelength $\lambda_1$ |
| $S_{in|\lambda 2}$ | second optical signal at wavelength $\lambda_2$ |
| $S_{RX|1}$ | first optical receive signal |
| $S_{RX|2}$ | second optical receive signal |
| $S_{pump}$ | optical pump signal |
| $R_{eval}$ | evaluation parameter |
| $P_{in|\lambda 1}$ | optical power of the first optical signal |
| $P_{in|\lambda 2}$ | optical power of the second optical signal |
| $P_{RX|\lambda 1}$ | optical power of the first optical receive signal |
| $P_{RX|\lambda 2}$ | optical power of the second optical receive signal |

**Claims**

1.   A method for monitoring fiber integrity in an optical transmission link (100, 200),

(a) the optical transmission link (100, 200) comprising an active network element (102, 202) and a passive network element (104, 204) which are connected via an optical transmission fiber (106, 206), **characterized in that** the method comprises the steps of:

(b) outputting, at the active network element (102, 202), an optical signal at a wavelength $\lambda_1$ or within a

**14**

wavelength range $\Delta\lambda_1$ into the transmission fiber (106, 206) in a direction towards the passive network element (104, 204), wherein the optical signal is either generated within the active network element (102, 202) or supplied to the active network element (102, 202);

(c) controlling or measuring or determining, at the active network element (102, 202), relative or absolute values of the optical power $P_{in|\lambda1}$ of the optical signal;

(d) amplifying, at the passive network element (104, 204), the optical signal by a pumped erbium-doped fiber (EDF) and reflecting the optical signal to form a reflected optical signal, the reflected optical signal being guided back, through the optical transmission fiber (106, 206), to the active network element (102, 202);

(e) measuring, at the active network element (102, 202), relative or absolute values $P_{RX|\lambda1}$ of the optical power of an optical receive signal $S_{RX|1}$ at a wavelength $\lambda_1$ or within a wavelength range $\Delta\lambda_1$ that is received at the active network element (102, 202); and

(f) determining an evaluation parameter $R_{eval}$ that is essentially determined by the transmission characteristics of the optical transmission fiber (106, 206) by using measured values of the optical power $P_{RX|\lambda1}$ of the optical receive signal $S_{RX|1}$ and the optical power $P_{in|\lambda1}$ of the optical signal; and

(g) comparing the evaluation parameter $R_{eval}$ with a predetermined evaluation threshold value in order to determine the integrity of the transmission fiber (106, 206).

2. The method according to claim 1, wherein the method further comprises the step of

outputting, at the active network element (102, 202), a pump signal into the transmission fiber (106, 206) in a direction towards the passive network element (104, 204), wherein the pump signal is configured to pump the EDF in the passive network element and is either generated within the active network element (102, 202) or supplied to the active network element (102, 202).

3. The method according to any of claims 1 or 2, wherein the evaluation parameter $R_{eval}$ is determined by forming a ratio of the measured or determined optical power $P_{in|\lambda1}$ of the optical signal and absolute values $P_{RX|\lambda1}$ of the optical power of the optical receive signal $S_{RX|1}$.

4. The method according to any of the preceding claims, wherein the method further comprises the steps of

(a) outputting, at the active network element (102, 202), a second optical signal at a wavelength $\lambda_2$ or within a wavelength range $\Delta\lambda_2$ into the transmission fiber (106, 206) in a direction towards the passive network element (104, 204), wherein the wavelengths $\lambda_1$ and $\lambda_2$ are close enough to each other that they experience essentially the same wavelength-dependent attenuation and scattering in the transmission fiber (106, 206), and wherein the second optical signal is either generated within the active network element (102, 202) or supplied to the active network element (102, 202);

(b) measuring or determining, at the active network element (102, 202), relative or absolute values of the second optical power $P_{in|\lambda2}$ of the optical signal;

(c) reflecting, at the passive network element (104, 204), a predetermined power portion of the second optical signal to form a second reflected optical signal, the second reflected optical signal being guided back, through the optical transmission fiber (106, 206), to the active network element (102, 202);

(d) measuring, at the active network element (102, 202), relative or absolute values $P_{RX|\lambda2}$ of the optical power of a second optical receive signal $S_{RX|2}$ at a wavelength $\lambda_2$ or within a wavelength range $\Delta\lambda_2$ that is received at the active network element (102, 202); and

(e) determining an evaluation parameter $R_{eval2}$ that is essentially determined by the transmission characteristics of the optical transmission fiber (106, 206) by using measured values of the optical power $P_{RX|\lambda1}$ and $P_{RX|\lambda2}$ of the first and second optical receive signal and the optical power $P_{in|\lambda1}$ and $P_{in|\lambda2}$ of the first and second optical signal; and

(f) comparing the evaluation parameters $R_{eval}$ and/or $R_{eval2}$ with a predetermined evaluation threshold value in order to determine the integrity of the transmission fiber (106, 206).

5. The method according to claim 2, wherein

the power of the pump signal is gradually increased up to a threshold value preferably from $10^{-1}$ mW to 10 mW, more preferably from $10^{-1}$ mW to 1 mW and most preferably from $10^{-1}$ mW to 0.5 mW; and

wherein the evaluation parameter $R_{eval}$ is the slope of the optical power of the optical receive signal $S_{RX|1}$ that is received at the active network element depending on the optical pump power.

6. The method according to claim 4 or 5, wherein the wavelengths $\lambda_1$ and $\lambda_2$ of the first and second optical signal are chosen such that they encounter a wavelength-dependent attenuation, caused by the optical transmission fiber (106, 206), that does not differ by more than a predetermined threshold value, wherein the predetermined threshold value is preferably less than 0.5 dB, more preferably less than 0.2 dB and most preferably less than 0.1 dB in case of the twofold length of the optical transmission fiber (106, 206).

7. The method according to any of claims 2 to 6, wherein the pump signal is a pump signal adapted to effect Raman amplification within the optical transmission fiber.

8. The method according to any of the preceding claims, wherein the optical power of the optical signal is periodically amplitude-modulated, preferably by a sinusoidal signal having a predetermined modulation frequency, and wherein the modulation frequency is chosen in such a way that the evaluation parameter $R_{eval}$ is at a maximum in case of existing fiber integrity.

9. An active network element (102, 202) for monitoring fiber integrity in an optical transmission link (100, 200) according to one of claims 1 to 8, the active network element (102, 202) comprising:

a) a first optical signal port (110, 210) being connectable to a first end of the optical transmission fiber (106, 206), the first optical signal port (110, 210) being connected to a first end of an internal optical path;
b) a first optical transceiver (105, 205) which is configured,

in case the optical signal at wavelength $\lambda_1$ is not supplied to the active network element (102, 202), to create the first optical signal at wavelength $\lambda_1$ and couple the optical signal at wavelength $\lambda_1$ into the optical path (116, 216) by means of the optical coupling device (109, 209) and to receive, via the optical coupling device (109, 209), the optical receive signal $S_{RX|1}$ that is received at the first optical signal port (110, 210) if the first optical signal port (110, 210) is connected, via the optical transmission fiber (106, 206), to the passive network element (104, 204);
or, in case the optical signal at wavelength $\lambda_1$ is supplied to the active network element (102, 202), to receive via an optical coupling device (109, 209) the first optical signal at wavelength $\lambda_1$ and couple the optical signal at wavelength $\lambda_1$ into the optical path (116, 216) by means of the optical coupling device (109, 209) and to receive via the optical coupling device (109, 209), the optical receive signal $S_{RX|1}$ that is received at the first optical signal port (110, 210) if the first optical signal port (110, 210) is connected, via the optical transmission fiber (106, 206), to the passive network element (104, 204);

c) wherein the first optical transceiver (105, 205) is further configured to measure or determine relative or absolute values of the optical power $P_{in|\lambda 1}$ of the optical signal and relative or absolute values $P_{RX|\lambda 1}$ of the optical power of an optical receive signal $S_{RX|1}$.

10. An active network element (102, 202) according to claim 9, further comprising:

a second optical signal source (120, 220) which is configured to create and couple a pump signal suitable to pump an EDF in a passive network element into the optical path (116, 216) by means of the optical coupling device (109, 209) if the first optical signal port (110, 210) is connected, via the optical transmission fiber (106, 206), to the passive network element (104, 204).

11. The active network element (102, 202) according to claim 9 or 10 comprising an evaluation unit (140, 240) which is configured to determine the evaluation parameter $R_{eval}$ using the values measured by the first optical transceiver (105, 205).

12. The active network element (102, 202) according to any of claims 9 to 11 comprising a transmission unit (142) configured to transmit information on the values measured by the first optical transceiver (105, 205) to an evaluation unit (140, 240) which is configured to determine the evaluation parameter $R_{eval}$.

13. The active network element (102, 202) according to any of claims 9 to 12, wherein the active network element (102, 202) further comprises a second optical signal port (108, 208) which is connectable to a further optical transmission fiber (112, 212) and wherein the optical coupling device (109, 209) is configured to pass through an optical transmission signal received at the second optical signal port (108, 208) to the first optical signal port (110, 210) and vice versa.

14. A system for monitoring fiber integrity in an optical transmission link (100, 200), configured to implement the method according to any of claims 1 to 8, comprising:

   (a) an active network element (102, 202) according to any of claims 9 to 13; and
   (b) a passive network element (104, 204) comprising a third optical signal port (111, 211) which is connectable to a second end of the optical transmission fiber (106, 206), an EDF configured to amplify the optical signal at a wavelength $\lambda_1$ or within a wavelength range $\Delta\lambda_1$ and a reflection device (144, 244) configured to reflect the optical signal and to feed the reflected power portion to the third optical signal port (111, 211) in the direction of the active network element (102, 202); and
   (c) an evaluation unit (140, 240), configured to determine the evaluation parameter $R_{eval}$ using the measured values and to use the evaluation parameter $R_{eval}$ to determine the integrity of the optical transmission fiber (106, 206).

15. The system according to claim 14, **characterized in that** the passive network element (104, 204) comprises a fourth optical signal port (113, 213) which is connectable to a further optical transmission fiber (114, 214), and that the passive network element (104, 204) is configured to pass through, via an optical path (117, 217), an optical transmission signal received at the third optical signal port (111, 211) to the fourth optical signal port (113, 213) and vice versa, wherein the passive network element (104, 204) is configured to, in case the first optical signal at wavelength $\lambda_1$ is not supplied to the active network element (102, 202), dissipate all optical power of the optical signal apart from the reflected optical power portion of the optical signal.

Fig. 1

**Fig. 2**

$S_{RX|1}$

$S_{in| \lambda 1}$

$S_{pump}$

Rayleigh-scattering

EP 4 730 671 A1

Fig. 3

3

200

202

204

206

208

209

210

211

212

213 214

216

217

220

222

224

229 230

231

232

233

234

235

240

244

205

$S_{in|\lambda1}$

$S_{pump}$

Rayleigh-scattering

$S_{RX|\lambda1}$

Fig. 4a

Fig. 4b

Fig. 4c

Fig. 4d

Fig. 5

EP 4 730 671 A1

Fig. 6

Fig. 7

8

Amplification by pumped EDF

Attenuation by unpumped EDF

Power distribution with high pump power

Power distribution with low pump power

Raman Amplification

Raman Amplification

Signal power (logarithmic)

Propagation distance along fiber axis

Fig. 8

EP 4 730 671 A1

Fig. 9

## EUROPEAN SEARCH REPORT

Application Number

EP 24 20 7400

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 784 388 A2 (KOKUSAI DENSHIN DENWA CO LTD [JP]) 16 July 1997 (1997-07-16)<br>* column 1, lines 7-14 *<br>* column 10, line 53 - column 13, line 26 *<br>* figures 4, 7 *<br>----- | 1-15 | INV.<br>H04B10/071 |
| | | | TECHNICAL FIELDS SEARCHED (IPC) |
| | | | H04B |

The present search report has been drawn up for all claims

| Place of search | Date of completion of the search | Examiner |
|---|---|---|
| Munich | 20 March 2025 | Rolan Cisneros, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 7400

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| EP 0784388 | A2 | 16-07-1997 | EP | 0784388 A2 | 16-07-1997 |
| | | | JP | 3411436 B2 | 03-06-2003 |
| | | | JP | H09200132 A | 31-07-1997 |
| | | | US | 5903375 A | 11-05-1999 |

EPO FORM P0459

For more details about this annex : see Official Journal of the European Patent Office, No. 12/82

## EP 4 730 671 A1

**Patent documents cited in the description**

- EP 1229382 B1